# EUROPEAN PATENT APPLICATION

(11) **EP 1 732 253 A2**
(43) Date of publication of application: **13.12.2006**
(21) Application number: 06011927.8
(22) Date of filing: 09.06.2006
(51) Int. Cl.: H04H 1/00, H04N 5/445

(54) **Method and apparatus for providing an integrated Electronic Program Guide (EPG) in a dual mode Digital Multimedia Broadcast (DMB) receiver**

(30) Priority: 09.06.2005 KR 20050049408
(71) Applicant: Samsung Electronics Co., Ltd., Yeongtong-gu Suwon-si, Gyeonggi-do (KR)
(72) Inventor: Kim, Hyun-Chi, Yeongtong-gu Suwon-si Gyeonggi-do (KR); Kim, Young-Jip, Yeongtong-gu Suwon-si Gyeonggi-do (KR); Oh, Yun-Je, Yeongtong-gu Suwon-si Gyeonggi-do (KR); Jung, Ji-Wuck Samsung Electronics Co, Ltd., Suwon-si Gyeonggi-do (KR)
(74) Representative: Grünecker, Kinkeldey, Stockmair & Schwanhäusser Anwaltssozietät

(57) **Abstract**

Disclosed is a method for integrating and providing EPG information provided through a terrestrial DMB and a satellite DMB in a dual mode DMB receiver which supports both the terrestrial DMB and the satellite DMB, the method comprising detecting, by the dual mode DMB receiver, the EPG information from the terrestrial DMB and the satellite DMB, generating categories according to ensembles of the terrestrial DMB, and assigning one category to a satellite DMB system, setting the generated categories as an upper layer, and storing EPG information according to each category as a lower layer of the upper layer, and outputting the EPG information according to said each category based on a change in the category, thereby providing an integrated EPG.

## Description

The present invention relates to a dual mode Digital Multimedia Broadcasting (DMB) receiver which supports both a terrestrial DMB and a satellite DMB, and more particularly to a method for providing an Electronic Program Guide (EPG), which integrates and provides different types of EPG information provided by the terrestrial DMB and the satellite DMB.

DMB is an abbreviation for "Digital Multimedia Broadcasting", which represents a broadcasting service for providing a portable receiver or a vehicle receiver with various multimedia signals including voice, images, etc., in a digital format. DMB may be classified as a satellite DMB and a terrestrial DMB according to the transmission means of the multimedia signals. Satellite DMB provides programs to DMB terminals throughout the nation through satellite electric waves, and the terrestrial DMB provides broadcasting through public VHF channels 8 and 12.

A satellite DMB system and a terrestrial DMB system are intended to provide users with several tens of broadcasting channels, and each DMB system provides an EPG in order to supply program information for an age of multi-channels.

An EPG represents a program guide for an plurality of multi-channels, and displays a broadcast program table on a digital TV screen, thereby enabling a user to easily obtain information on desired broadcasting. Such EPG information is transferred together with broadcasting signals.

In the current satellite DMB, a method for providing an EPG has been completely standardized, and the EPG is being provided through a broadcasting service. According to the current EPG-providing method used by a satellite DMB system, one MPEG Transport Stream (TS) is separately assigned in order to transmit an EPG. More specifically, a Packet ID (PID) of a corresponding MPEG TS is provided through a Program Map Table (PMT), and an entire EPG is provided through the PID. In the satellite DMB, data for an EPG are actually transmitted through a Service Description Table (SDT) and an Event Information Table (EIT).

In the terrestrial DMB, a method for providing an EPG is being standardized. It is strongly expected that an EPG of an extensible Markup Language (XML) format adopted by an existing Digital Audio Broadcasting (DAB) will be introduced.

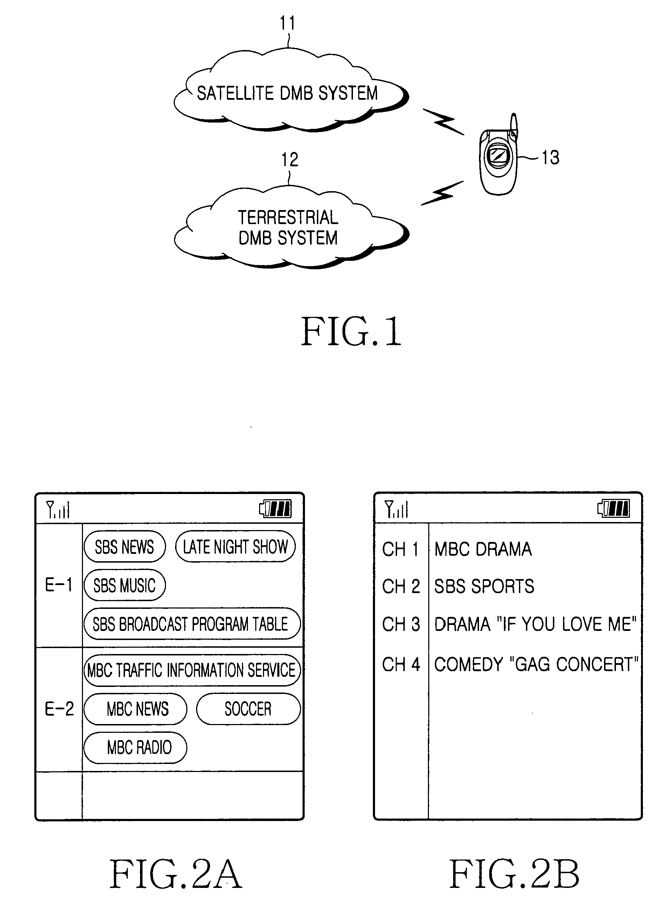

FIG. 1 is a diagram of a system for illustrating an operation of a dual mode DMB receiver according to the prior art.

Referring to FIG. 1, the dual mode DMB receiver 13 receives and outputs DMB services from a satellite DMB system 11, which provides a satellite DMB service, and a terrestrial DMB system 12, which provides a terrestrial DMB service, by means of two Radio Frequency (RF) tuners, respectively.

The dual mode DMB receiver 13 also receives EPG information from each of the two systems 11 and 12. When outputting the received EPG information to a user, the dual mode DMB receiver 13 selects a corresponding DMB broadcasting mode (i.e. a satellite DMB mode or a terrestrial DMB mode), and outputs only an EPG regarding DMB broadcasting of the selected broadcasting mode.

However, when a user makes use of such a dual mode DMB receiver, the user often wants to search for channels and watch desired broadcasting regardless of whether DMB broadcasting is a satellite DMB or a terrestrial DMB. Accordingly, when a user requests channel information through EPG information, it is necessary to provide all EPG information regardless of whether it is a satellite DMB and a terrestrial DMB.

However, if EPG information of a terrestrial DMB system and EPG information of a satellite DMB system are integrated and provided to a user in an existing EPG scheme, it is not efficient for the user to use the integrated EPG information because the amount of the EPG information is large and the interfaces are different.

Accordingly, the present invention has been made to solve the above-mentioned problems occurring in the prior art and provides additional advantages.

It is the object of the present invention to provide a method for providing an integrated EPG in a dual mode DMB receiver supporting both a terrestrial DMB and a satellite DMB, which provides a user with service information relating to the terrestrial DMB and the satellite DMB as a single integrated EPG.

This object is solved by the subject matter of the independent claims.

Preferred embodiments are defined in the dependent claims.

An aspect of the present invention is to increase user convenience by providing an efficient service search method on an EPG when a dual mode DMB receiver supporting both a terrestrial DMB and a satellite DMB provides a single integrated EPG.

In one embodiment, there is provided a method for integrating and providing Electronic Program Guide (EPG) information provided through a terrestrial Digital Multimedia Broadcasting (DMB) and a satellite DMB in a dual mode DMB receiver which supports both the terrestrial DMB and the satellite DMB, the method including a detecting by the dual mode DMB receiver the EPG information from the terrestrial DMB and the satellite DMB, generating categories according to ensembles of the terrestrial DMB, and assigning one category to a satellite DMB system, setting the generated categories as an upper layer, and storing EPG information according to each category as a lower layer of the upper layer, and outputting the EPG information according to each of said categories based on a change in the category, thereby providing an integrated EPG.

In another embodiment, there is provided a method for integrating and providing Electronic Program Guide (EPG) information provided through a terrestrial Digital Multimedia Broadcasting (DMB) and a satellite DMB in a dual mode DMB receiver which supports both the terrestrial DMB and the satellite DMB, the method including detecting, by the dual mode DMB receiver, the EPG information from the terrestrial DMB and the satellite DMB, performing a filtering operation for necessary portions in order to provide a user with the detected EPG information, reconfiguring an EPG, which is acquired by integrating EPGs for the terrestrial DMB and the satellite DMB, according to the EPG information obtained through the filtering operation and outputting the reconfigured EPG information to a user.

The above features and advantages of the present invention will be more apparent from the following detailed description taken in conjunction with the accompanying drawings, in which:
FIG. 1 is a diagram of a system for illustrating an operation of a dual mode DMB receiver according to the prior art;
FIGs. 2a and 2b are exemplary views illustrating EPG information in a satellite DMB system and EPG information in a terrestrial DMB system;
FIG. 3 is a flow diagram illustrating an operation for providing an integrated EPG in a dual mode DMB receiver according to a first embodiment of the present invention;
FIG. 4 is an exemplary view illustrating an integrated EPG screen according to a first embodiment of the present invention;
FIG. 5 is a flow diagram illustrating an operation for providing an integrated EPG in a dual mode DMB receiver according to a second embodiment of the present invention;
FIG. 6 is a flow diagram illustrating a method for analyzing a service correlation for efficient searching in a dual mode DMB receiver, which provides an integrated EPG, according to one embodiment of the present invention; and
FIG. 7 is an exemplary view of information on a broadcast program relating to the service correlation analysis method of FIG. 6 in an integrated EPG according to the present invention.

Hereinafter, embodiments according to the present invention will be described with reference to the accompanying drawings. For the purposes of clarity and simplicity, a detailed description of known functions and configurations incorporated herein will be omitted as it may obscure the subject matter of the present invention.

The subject matter of the present invention is a dual mode DMB receiver capable of receiving both satellite DMB data and terrestrial DMB data through one receiver.

Hereinafter, a method for providing an EPG in a satellite DMB will be described. One MPEG Transport Stream (TS) is separately assigned in order to transmit an EPG. A Packet ID (PID) of the assigned MPEG TS is known by a Program Map Table (PMT). In the satellite DMB, data for an EPG are actually transmitted through a Service Description Table (SDT) and an Event Information Table (EIT).

Tables 1 and 2 below exemplify the configuration of the SDT and the EIT

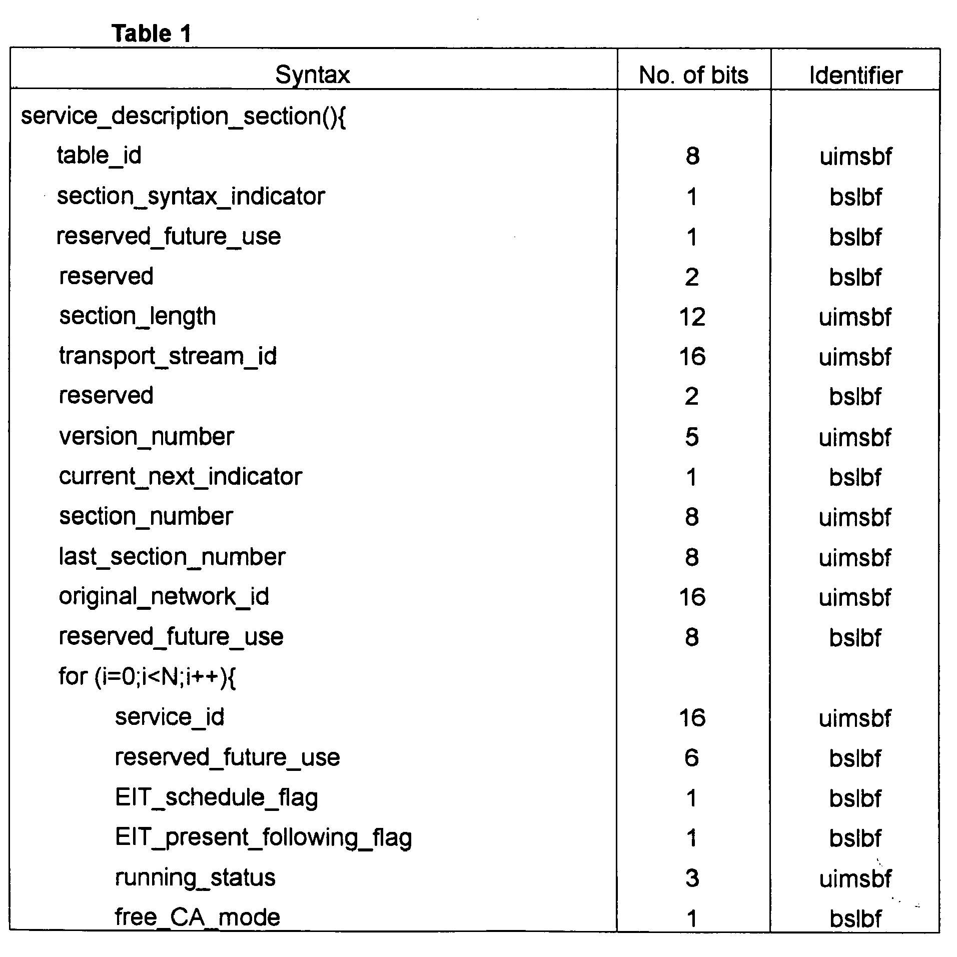

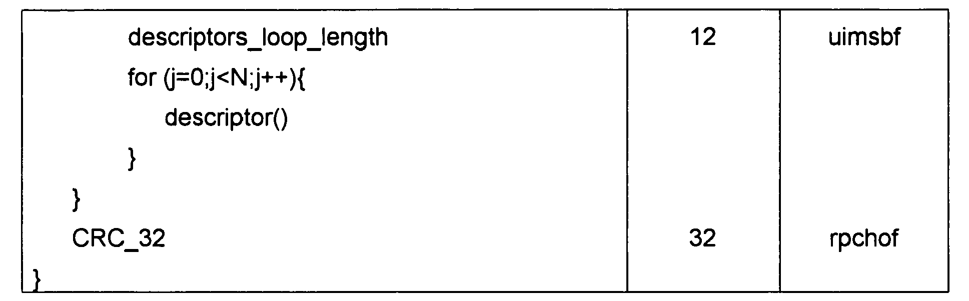

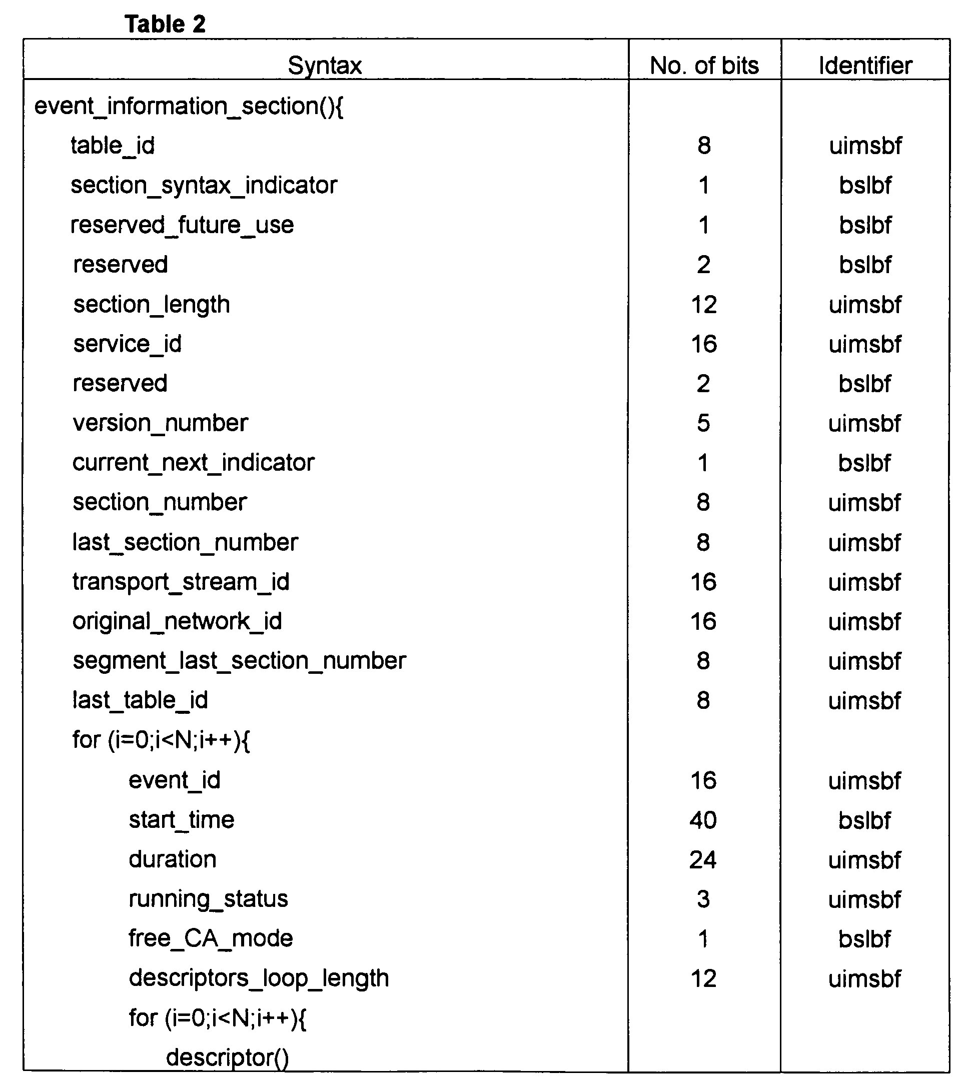

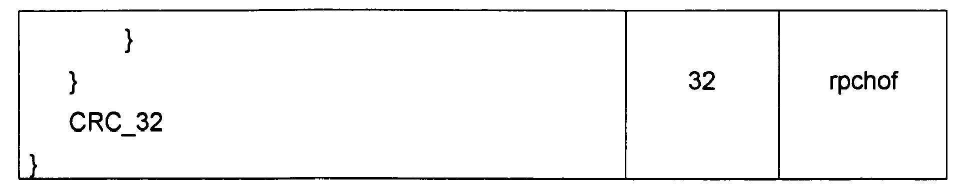

In order to obtain EPG information from a satellite DMB system in the dual mode DMB receiver, data necessary for configuring an EPG are acquired through the "service descriptor", the "data_broadcast_descriptor", and the "component descriptor", etc., transmitted through the SDT and the EIT as shown in Tables 1 and 2.

In the terrestrial DMB, the data format and transmission of the EPG has not yet been standardized. However, it is expected that an EPG of an extensible Markup Language (XML) format used by a Digital Audio Broadcasting (DAB) will be introduced.

Hereinafter, a description of the present invention will be given on an assumption that an EPG for the terrestrial DMB is provided in the XML format.

The EPG data of the XML format in the terrestrial DMB as described above are transmitted through a Multimedia Object Transfer (MOT) protocol. The MOT protocol corresponds to a data transmission protocol widely used for transmission of an object in the terrestrial DMB standard.

In a terrestrial DMB system, EPG information may be largely classified as "service information" for storing information on services, "programme information" for storing program information, and "group information" for storing group information on similar programs.

Tables 3 to 5 below show elements and attributes used for the "service information", the "programme information", and the "group information" in the EPG of the XML format in the terrestrial DMB.

**Table 3**

| Element | Attribute |
|---|---|
| serviceinformation | |
| | system |
| serviceinformation.ensemble | |
| | id |
| serviceinformation.ensemble.shortName | |
| | xml:lang |
| serviceinformation.ensemble.mediumName | |
| | xml:lang |

| | |
|---|---|
| serviceinformation.ensemble.frequency | |
| | type |
| | kHz |
| serviceinformation.ensemble.mediaDescription | |
| serviceinformation.ensemble.mediaDescription.multimedia | |
| | type |
| | mimeValue |
| | xml:lang |
| | url |
| | width |
| | height |
| serviceinformation.ensemble.service | format |
| | bitrate |
| serviceinformation.ensemble.service.serviceID | |
| | id |
| | type |
| serviceinformation.ensemble.service.shortName | |
| | xml:lang |
| serviceinformation.ensemble.service.mediumName | |
| | xml:lang |
| serviceinformation.ensemble.service.mediaDescription | |
| serviceinformation.ensemble.service.mediaDescription.multimedia | |
| | type |
| | mimeValue |
| | xml:lang |
| | url |
| | width |
| | height |

**Table 4**

| Element | Attribute |
|---|---|
| epg | |
| epg.schedule | |

| | |
|---|---|
| epg.schedule.scope | |
| | startTime |
| | stopTime |
| epg.schedule.scope.serviceScope | |
| | id |
| epg.schedule. programme | |
| | short id |
| | recommendation |
| | broadcast |
| | bitrate |
| epg.schedule.programme.mediumName | |
| | xml:lang |
| epg.schedule.programme.longName | |
| | xml:lang |
| epg.schedule.programme.location | |
| epg.schedule.programme.location.time | |
| | time |
| | duration |
| epg.schedule.programme.location.bearer | id |
| | trigger |
| epg.schedule.programme.mediaDescription | |
| epg.schedule.programme.mediaDescription. | |
| ShortDescription | |
| | xml:lang |
| epg.schedule.programme.genre | |
| | href |
| | type |
| epg.schedule.programme.memberof | |
| | short id |
| | index |

**Table 5**

| Element | Attribute |
|---|---|
| epg | |

| | |
|---|---|
| epg.programmeGroups | |
| epg.programmeGroups.programmeGroup | |
| | short id |
| | type |
| | numofltems |
| epg.programmeGroups.programmeGroup.mediumName | |
| | xml:lang |
| epg.programmeGroups.programmeGroup.longName | |
| | xml:lang |
| epg.programmeGroups.programmeGroup.genre | |
| | href |
| | type |
| epg.programmeGroups.programmeGroup.memberof | |
| | short id |
| | index |

In the terrestrial DMB as described above, the transmitted EPG information is analyzed and processed in the form of XML data.

As described above, since the format, the transmission scheme and the content of information constituting respective EPGs are different in the terrestrial DMB and the satellite DMB, it is difficult to provide the EPGs as a single integrated EPG.

FIGs. 2a and 2b represent exemplary views illustrating EPG information in a satellite DMB system and EPG information in a terrestrial DMB system.

FIG. 2a exemplifies the EPG information in the terrestrial DMB system. The terrestrial DMB system provides respective EPGs divided according to ensembles. Further, the terrestrial DMB system also provides brief description information and time information on broadcasting according to provided broadcasting services.

FIG. 2b exemplifies the EPG information in the satellite DMB system. The satellite DMB system provides respective EPGs divided according to channels. Further, the satellite DMB system classifies broadcasting services according to provided channels, and provides brief description information and time information on the classified broadcasting services.

In order to provide the different EPGs as described above in a single integrated form, the embodiment of the present invention proposes the following two processing methods.

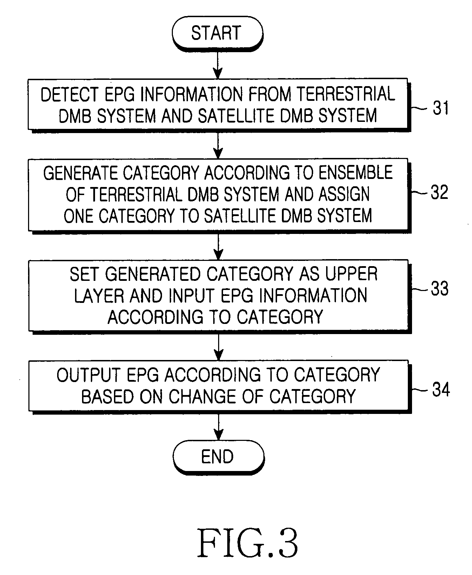

One of the two methods is to provide an integrated EPG by integrating provided interfaces, rather than integrating the EPG information transmitted through the different DMB systems as single integrated EPG information. Hereinafter, this will be described in more detail with reference to FIG. 3.

FIG. 3 is a flow diagram illustrating an operation for providing the integrated EPG in the dual mode DMB receiver according to a first embodiment of the present invention.

Referring to FIG. 3, the dual mode DMB receiver according to the present invention detects respective EPG information from the terrestrial DMB system and the satellite DMB system according to the present invention (31). In the case of the satellite DMB system, the dual mode DMB receiver may obtain information on all channels. In the case of the terrestrial DMB system, the dual mode DMB receiver may obtain EPG information according to service providers, i.e. ensembles.

The dual mode DMB receiver generates categories according to the ensembles of the terrestrial DMB system, and also assigns one category to the satellite DMB system (32). That is, if it is assumed that six terrestrial DMB service providers exist, seven categories are generated.

Then, the dual mode DMB receiver sets the generated categories as an upper layer, and inputs and stores EPG information according to the categories, as the lower layer of the upper layer (33).

In the integrated EPG configured as described above, the EPGs are integrated through interfaces, instead of physically integrating the EPGs transferred in different manners, so that a user can easily retrieve the EPG information.

Further, the dual mode DMB receiver outputs EPG information according to a corresponding category based on a change in each category (34).

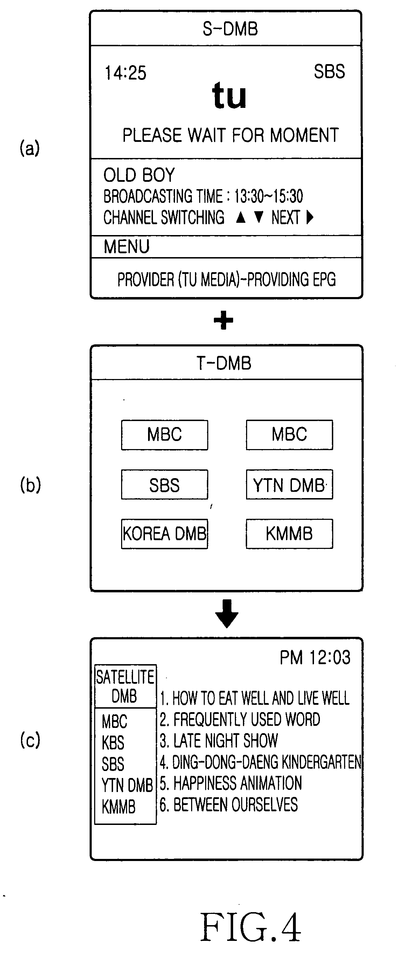

FIGs. 4a-c illustrate an exemplary view of an integrated EPG screen according to the first embodiment of the present invention.

FIG. 4a illustrates EPG information in an existing satellite DMB system, FIG. 4b illustrates EPG information in the terrestrial DMB system, and FIG. 4c illustrates integrated EPG information according to the embodiment of the present invention. As illustrated in FIG. 4c, it can be understood that categories according to services are provided in the left side of the screen, and EPG information according to categories is provided in the right side of the screen.

In this case, even when a category changes from the satellite DMB system to the terrestrial DMB system, the dual mode DMB receiver has only to intactly output the EPG information provided by the corresponding terrestrial DMB system. That is, it is possible to simultaneously provide the EPG information without modifying the EPG information.

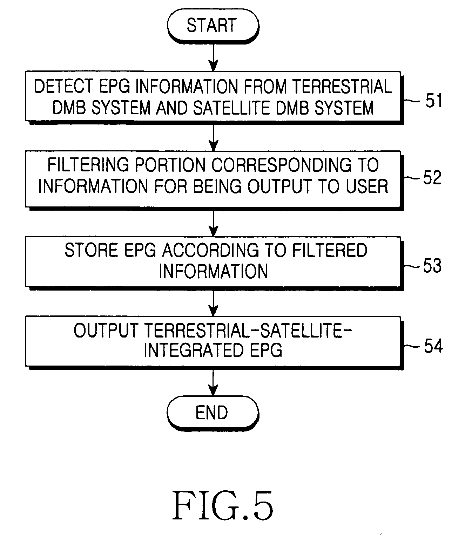

In a second embodiment, a method is to provide an integrated EPG by newly configuring EPG information input from the terrestrial DMB system and EPG information input from the satellite DMB system. Hereinafter, this will be described with reference to FIG. 5.

FIG. 5 is a flow diagram illustrating an operation for providing the integrated EPG in the dual mode DMB receiver according to a second embodiment of the present invention.

Referring to FIG. 5, the dual mode DMB receiver according to the present invention detects respective EPG information from the terrestrial DMB system and the satellite DMB system (51). In the case of the satellite DMB system, the dual mode DMB receiver may obtain information on all channels. In the case of the terrestrial DMB system, the dual mode DMB receiver may obtain EPG information according to service providers, i.e. ensembles.

The dual mode DMB receiver performs a filtering operation for necessary portions in order to provide a user with the respective EPG information (52).

In more detail, in the case of the satellite DMB, the EPG information provided to the user corresponds to brief description information, such as channel information, program identification information, time information and service names. In the case of the terrestrial DMB, the EPG information provided to the user corresponds to brief description information, such as ensemble information, program identification information, time information and service names.

It is also possible to provide other information. However, for description for the embodiment of the present invention, it is exemplified that the EPG information includes the information as described above.

The brief description information, such as program identification information, time information and service names, of the basically provided information shows a difference in terms of its transmission scheme, but shows no difference in terms of its content and display scheme. Accordingly, it is possible to extract the information in the same manner and to provide single information. The dual mode DMB receiver filters the brief description information, such as program identification information, time information and service names, from the respective EPG information.

Herein, only the brief description information, such as program identification information, time information and service names, is exemplified as the filtered information. However, this is only for an exemplary description of the present invention, and the filtered information is not limited to the brief description information described herein. That is, it is possible to selectively filter information according to an algorithm for providing the integrated EPG of the dual mode DMB receiver. In the case of the terrestrial DMB, if EPG information required by the terrestrial DMB system is established, EPG information of the satellite DMB system corresponding to the EPG information is also established at the same time. Further, information regarding whether the EPG information of the terrestrial DMB system is similar to that of the satellite DMB system is provided through an EPG link information database between the systems.

As the satellite DMB includes channel information and the terrestrial DMB does not include channel information, the channel information is discarded. However, since such channel information is used by a user as important information for switching broadcasting channels, it is also possible to assign virtual channels to broadcasting services of the terrestrial DMB, respectively, and to enable filtering for the channel information to be performed for all EPGs through the virtual channels.

Further, the dual mode DMB receiver newly reconfigures the EPG information according to information obtained by filtering the channel information (53).

Then, the dual mode DMB receiver outputs the reconfigured EPG information (54). Consequently, it is possible to achieve an integrated EPG of the EPG information in both the terrestrial DMB system and the satellite DMB system.

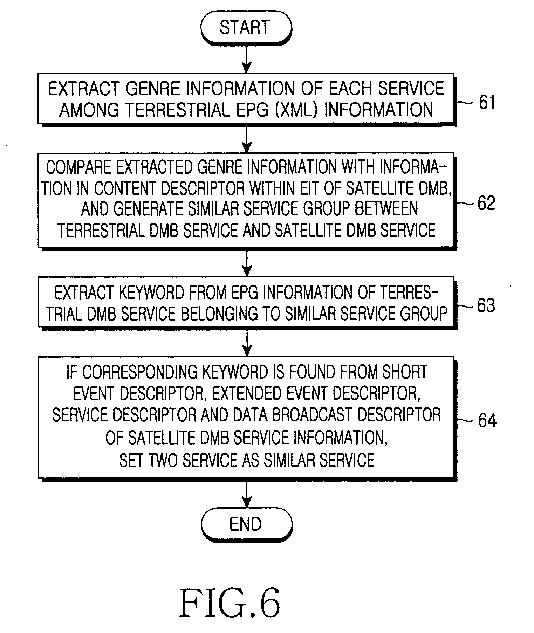

FIG. 6 is a flow diagram illustrating a method for analyzing a service correlation for efficient searching in the dual mode DMB receiver, which provides the integrated EPG, according to one embodiment of the present invention.

According to the method for analyzing the service correlation as illustrated in FIG. 6, programs correlating between broadcast programs provided by the terrestrial DMB and broadcast programs provided by the satellite DMB are defined as a correlating program, and this correlating program is provided to a user, so that it is possible to provide the user with information on a program similar to a favorite program when the user cannot watch the favorite program from among broadcast programs provided through many channels. Accordingly, the user can easily select preferred types of programs.

For this, it is necessary to analyze the correlation between services provided by the terrestrial DMB and services provided by the satellite DMB. Herein, in the case of using EPG information in the same system, it is not problematic to analyze its correlation because information on the EPG information has already been provided by an existing EPG. Accordingly, the embodiment of the present invention is restricted to a method for analyzing the correlation between broadcast programs provided by different systems.

A method for searching for broadcast programs of the satellite DMB system, which relate to those of the terrestrial DMB system, will now be described with regard to the terrestrial DMB system. Further, it will be apparent to those skilled in the art that broadcast programs of the terrestrial DMB system, which relate to those of the satellite DMB system, can be searched for with regard to the satellite DMB system.

When analyzing the correlation between the broadcast programs, it is necessary to use values, which properly represent the characteristics of each broadcast program, from among the EPG information. First, the EPG information of the terrestrial DMB system includes "genre" information and "keyword" information as the value fully representing the characteristics of a broadcast program.

The "genre" information includes values obtained by classifying broadcast programs according to its content. The "keyword" information corresponds to values used for searching for broadcast programs, etc., and includes words which can fully represent the characteristics of a broadcast program.

However, in the satellite DMB system, information fully representing the characteristics of a broadcast program is transmitted through a "content descriptor", a "short event descriptor", an "extended event descriptor", and a "data broadcast descriptor", which belong to the EIT, and a ""service descriptor" within the SDT.

The "content descriptor" includes contents obtained by classifying the broadcast programs of the satellite DMB according to content. That is, the "content descriptor" includes information similar to the "genre" information of the terrestrial DMB.

Further, the "short event descriptor", the "extended event descriptor", the "data broadcast descriptor', and the ""service descriptor" all include text information on a broadcast program.

Tables 6 to 10 below show field configurations of such descriptors.

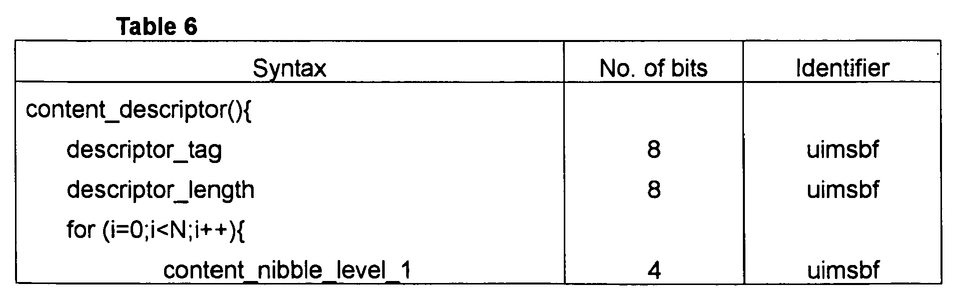

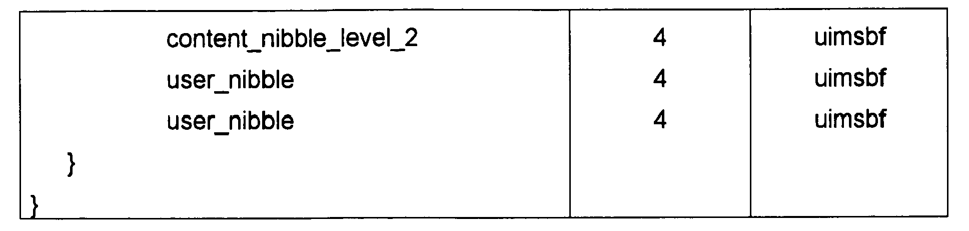

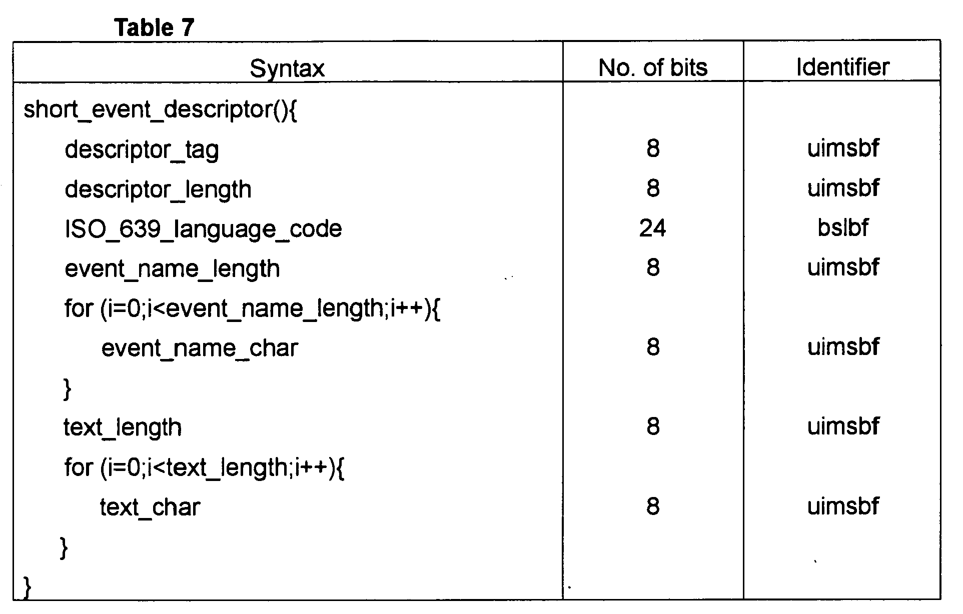

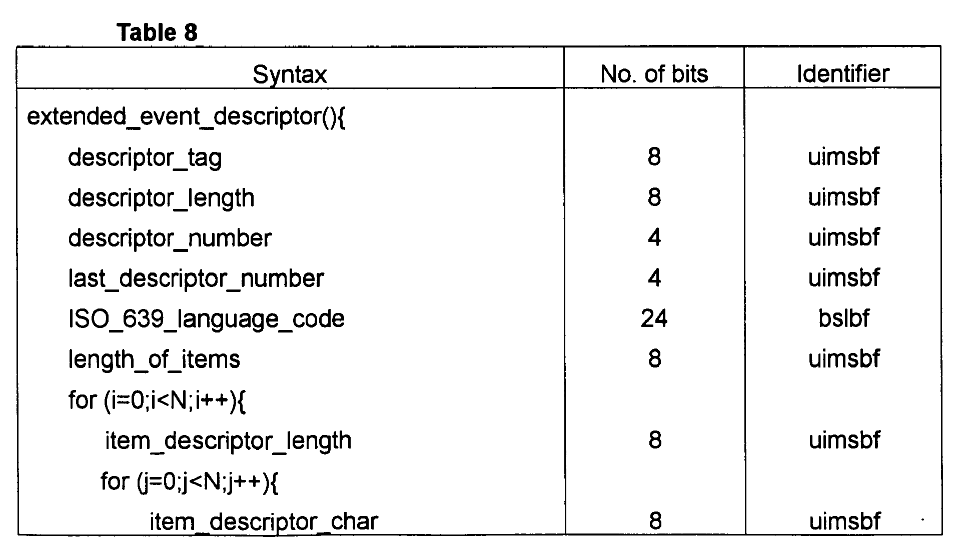

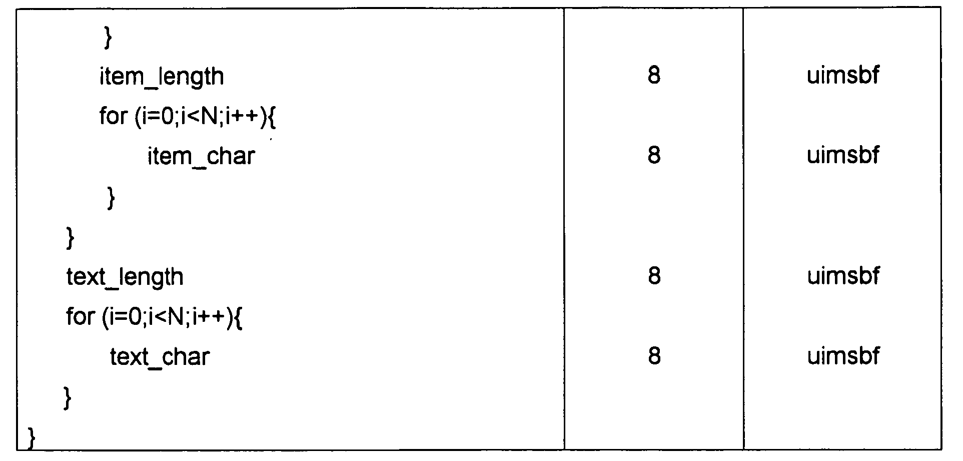

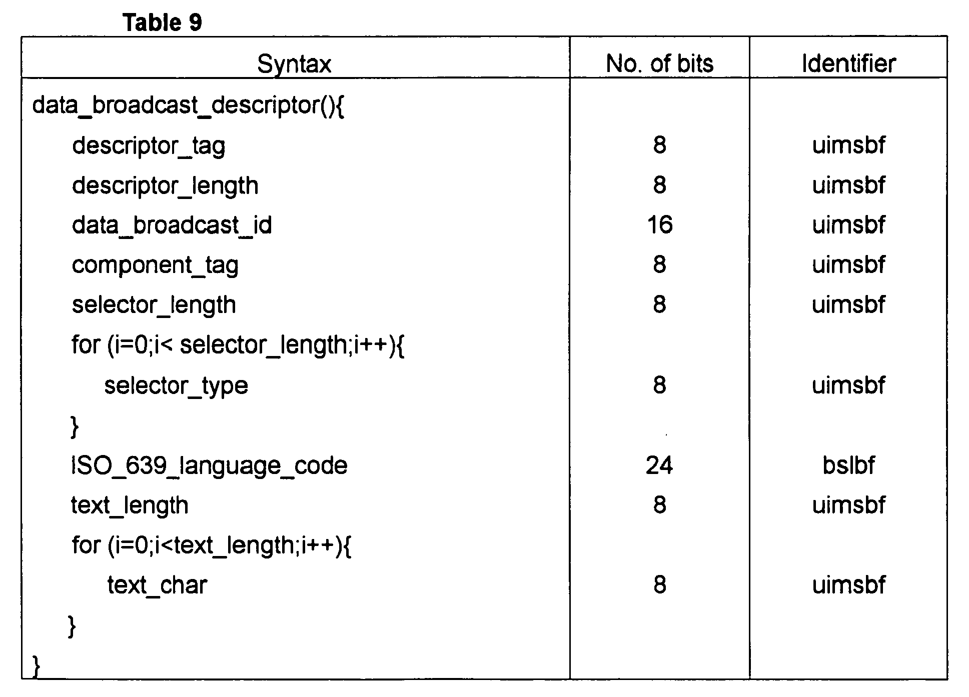

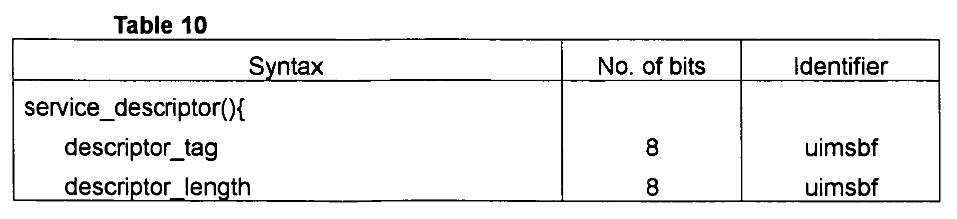

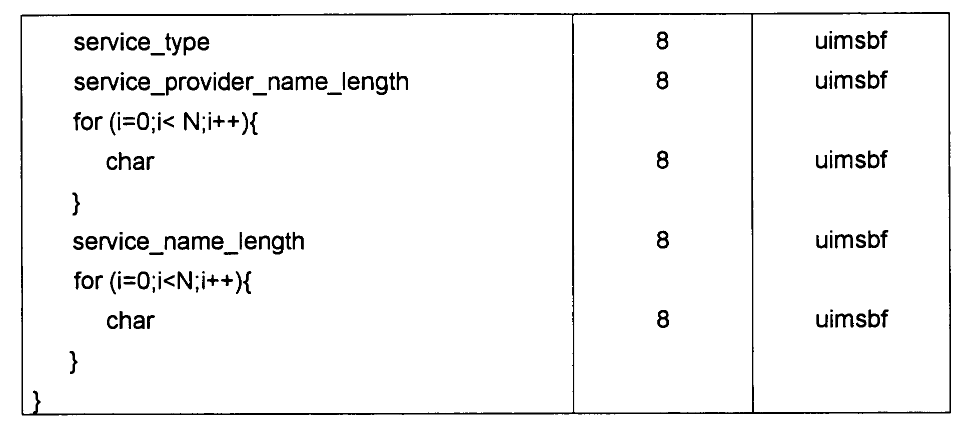

A process for analyzing the correlation between broadcast programs provided by different systems will be described with reference to FIG. 6.

If EPG information of the terrestrial DMB is received, the dual mode DMB receiver extracts genre information on each broadcast program from the received EPG information (61).

Then, the dual mode DMB receiver compares the extracted genre information with the "content descriptor" included in the EIT of the satellite DMB, which corresponds to the genre information, and generates a similar service group belonging to a similar genre from among the broadcast programs of the terrestrial DMB and the broadcast programs of the satellite DMB (62). Hence, a terrestrial DMB service and a satellite DMB service are mixed in the similar service group generated as described above.

Further, the dual mode DMB receiver extracts keyword information from the EPG information of the terrestrial DMB broadcast program belonging to_the similar service group (63).

Then, the dual mode DMB receiver searches for the "short event descriptor", the "extended event descriptor", and the "data broadcast descriptor", which are included in the EIT of the satellite DMB, and the ""service descriptor" within the SDT by means of the extracted keyword information. If similar keyword information is found, the dual mode DMB receiver sets a corresponding broadcast program as a broadcast program similar to that having provided the keyword (64).

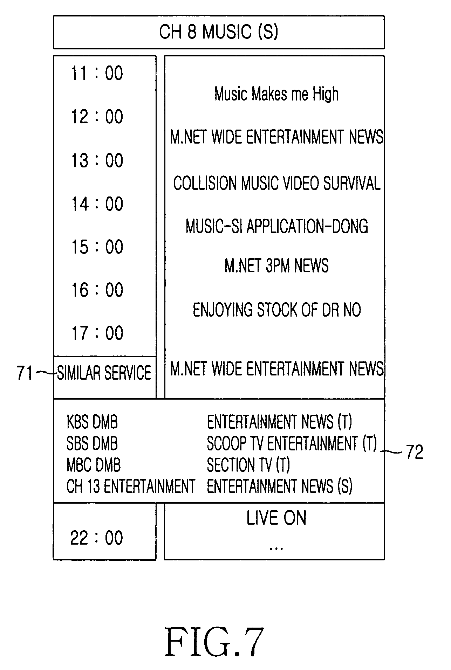

FIG. 7 is an exemplary view of information on a broadcast program relating to the service correlation analysis method of FIG. 6 in the integrated EPG according to the present invention.

Referring to FIG. 7, if the correlation of the terrestrial DMB service and the satellite DMB service, which has been established through the service correlation analysis method of FIG. 6, is applied to the integrated EPG, it can be understood that a user can more efficiently search for services on the EPG.

For example, if a user requests information on a broadcast program relating to a corresponding broadcast program while viewing one DMB service information through the provided integrated EPG, the dual mode DMB receiver shows a list of related broadcast programs to the user as illustrated by a reference number 72. If the user selects a broadcast program from the list, the dual mode DMB receiver can show EPG information of the selected broadcast program.

When it is considered that a DMB service is used in a mobile environment and a specific broadcast program may temporarily be unavailable, the function for searching for a broadcast program similar to the specific broadcast program through an EPG can improve the convenience of a user utilizing the DMB service.

According to the present invention as described above, a dual mode DMB receiver, which supports both a terrestrial DMB and a satellite DMB, can provide a user with service information relating to the terrestrial DMB and the satellite DMB as a single integrated EPG.

Further, according to the present invention, when a dual mode DMB receiver supporting both a terrestrial DMB and a satellite DMB provides a single integrated EPG, it is possible to increase user convenience by providing an efficient service search method on an EPG.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be executed by such software using a general purpose computer, or a special processor or in programmable or dedicated hardware, such as an ASIC or FPGA.

Although preferred embodiments of the present invention have been described for illustrative purposes, those skilled in the art will appreciate that various modifications, additions and substitutions are possible, without departing from the scope of the invention as disclosed in the accompanying claims.

## Claims

1. A method for integrating and providing electronic program guide information provided through a terrestrial digital multimedia broadcasting and a satellite digital multimedia broadcasting in a dual mode digital multimedia broadcasting receiver which supports both the terrestrial digital multimedia broadcasting and the satellite digital multimedia broadcasting, the method comprising the steps of:
detecting, by the dual mode digital multimedia broadcasting receiver, the electronic program guide information from the terrestrial digital multimedia broadcasting and the satellite digital multimedia broadcasting;
generating categories according to ensembles of the terrestrial digital multimedia broadcasting, and assigning one category to a satellite digital multimedia broadcasting system;
setting the generated categories as an upper layer, and storing electronic program guide information according to each category as a lower layer of the upper layer; and
outputting the electronic program guide information according to said each category based on a change in the category, thereby providing an integrated electronic program guide.

2. The method as claimed in claim 1, wherein similar broadcast programs in the terrestrial digital multimedia broadcasting and the satellite digital multimedia broadcasting can be searched for through the integrated electronic program guide.

3. The method as claimed in claim 2, wherein the step of searching for the similar broadcast programs comprises the steps of:
receiving the electronic program guide information of the terrestrial digital multimedia broadcasting, and extracting genre information on each broadcast program from the received electronic program guide information;
receiving the electronic program guide information of the satellite digital multimedia broadcasting, comparing the genre information with a "content descriptor" within an event information table, which corresponds to the genre information, and generating a similar service group;
searching for a "short event descriptor", an "extended event descriptor", and a "data broadcast descriptor", which are included in the event information table of the electronic program guide information of the satellite digital multimedia broadcasting, and a ""service descriptor" within a service description table by means of keyword information from among electronic program guide information on a predetermined broadcast program of the terrestrial digital multimedia broadcasting within the similar service group, and finding a value similar to the keyword information; and
setting a broadcast program of the satellite digital multimedia broadcasting, in which the value similar to the keyword information has been found, as a broadcast program relating to the predetermined broadcast program of the terrestrial digital multimedia broadcasting.

4. The method as claimed in claim 3, wherein the searched broadcast program is selected, so that changing between the broadcast program of the terrestrial digital multimedia broadcasting and broadcast program of the satellite digital multimedia broadcasting is possible.

5. A method for integrating and providing electronic program guide information provided through a terrestrial digital multimedia broadcasting and a satellite digital multimedia broadcasting in a dual mode digital multimedia broadcasting receiver which supports both the terrestrial digital multimedia broadcasting and the satellite digital multimedia broadcasting, the method comprising the steps of:
detecting, by the dual mode digital multimedia broadcasting receiver, the electronic program guide information from the terrestrial digital multimedia broadcasting and the satellite digital multimedia broadcasting;
performing a filtering operation for necessary portions in order to provide a user with the detected electronic program guide information;
reconfiguring an electronic program guide, which is acquired by integrating electronic program guides for the terrestrial digital multimedia broadcasting and the satellite digital multimedia broadcasting, according to the electronic program guide information obtained through the filtering operation; and
outputting the reconfigured electronic program guide information to a user.

6. The method as claimed in claim 5, wherein information for the filtering operation includes brief description information such as program identification information, time information and service names.

7. The method as claimed in claim 5 or 6, wherein information regarding whether the electronic program guide information of a terrestrial digital multimedia broadcasting system is similar to that of a satellite digital multimedia broadcasting system is provided through an electronic program guide link information database between the systems, and information for the filtering operation is set in one of the terrestrial digital multimedia broadcasting and the satellite digital multimedia broadcasting, so that the filtering operation is performed.

8. The method as claimed in one of claims 5 to 7, wherein similar broadcast programs in the terrestrial digital multimedia broadcasting and the satellite digital multimedia broadcasting can be searched for through the integrated electronic program guide.

9. The method as claimed in claim 8, wherein the step of searching for the similar broadcast programs comprises the steps of:
receiving the electronic program guide information of the terrestrial digital multimedia broadcasting, and extracting genre information on each broadcast program from the received electronic program guide information;
receiving the electronic program guide information of the satellite digital multimedia broadcasting, comparing the genre information with a "content descriptor" within an event information table, which corresponds to the genre information, and generating a similar service group;
searching for a "short event descriptor", an "extended event descriptor", and a "data broadcast descriptor", which are included in the event information table of the electronic program guide information of the satellite digital multimedia broadcasting, and a ""service descriptor" within a service description table by means of keyword information from among electronic program guide information on a predetermined broadcast program of the terrestrial digital multimedia broadcasting within the similar service group, and finding a value similar to the keyword information; and
setting a broadcast program of the satellite digital multimedia broadcasting, in which the value similar to the keyword information has been found, as a broadcast program relating to the predetermined broadcast program of the terrestrial digital multimedia broadcasting.

10. The method as claimed in claim 9, wherein the searched broadcast program is selected, so that changing between the broadcast program of the terrestrial digital multimedia broadcasting and broadcast program of the satellite digital multimedia broadcasting is possible.

11. An apparatus for integrating and providing electronic program guide information provided through a terrestrial digital multimedia broadcasting and a satellite digital multimedia broadcasting in a dual mode digital multimedia broadcasting receiver which supports both the terrestrial digital multimedia broadcasting and the satellite digital multimedia broadcasting, the apparatus comprising:
a processor in communication with a memory, the processor executing code for:
detecting, by the dual mode digital multimedia broadcasting receiver, the electronic program guide information from the terrestrial digital multimedia broadcasting and the satellite digital multimedia broadcasting;
generating categories according to ensembles of the terrestrial digital multimedia broadcasting, and assigning one category to a satellite digital multimedia broadcasting system;
setting the generated categories as an upper layer, and storing electronic program guide information according to each category as a lower layer of the upper layer; and
outputting the electronic program guide information according to said each category based on a change in the category, thereby providing an integrated electronic program guide.

12. The apparatus as claimed in claim 11, wherein similar broadcast programs in the terrestrial digital multimedia broadcasting and the satellite digital multimedia broadcasting can be searched for through the integrated electronic program guide.

13. The apparatus as claimed in claim 12, wherein the step of searching for the similar broadcast programs comprises the processor executing code for:
receiving the electronic program guide information of the terrestrial digital multimedia broadcasting, and extracting genre information on each broadcast program from the received electronic program guide information;
receiving the electronic program guide information of the satellite digital multimedia broadcasting, comparing the genre information with a "content descriptor" within an event information table, which corresponds to the genre information, and generating a similar service group;
searching for a "short event descriptor", an "extended event descriptor", and a "data broadcast descriptor", which are included in the event information table of the electronic program guide information of the satellite digital multimedia broadcasting, and a ""service descriptor" within a service description table by means of keyword information from among electronic program guide information on a predetermined broadcast program of the terrestrial digital multimedia broadcasting within the similar service group, and finding a value similar to the keyword information; and
setting a broadcast program of the satellite digital multimedia broadcasting, in which the value similar to the keyword information has been found, as a broadcast program relating to the predetermined broadcast program of the terrestrial digital multimedia broadcasting.

14. The apparatus as claimed in claim 13, wherein the searched broadcast program is selected so that changing between the broadcast program of the terrestrial digital multimedia broadcasting and broadcast program of the satellite digital multimedia broadcasting is possible.

15. An apparatus for integrating and providing electronic program guide information provided through a terrestrial digital multimedia broadcasting and a satellite digital multimedia broadcasting in a dual mode digital multimedia broadcasting receiver which supports both the terrestrial digital multimedia broadcasting and the satellite digital multimedia broadcasting, the apparatus comprising:
a processor in communication with a memory, the processor executing code for:
detecting, by the dual mode digital multimedia broadcasting receiver, the electronic program guide information from the terrestrial digital multimedia broadcasting and the satellite digital multimedia broadcasting;
performing a filtering operation for necessary portions in order to provide a user with the detected electronic program guide information;
reconfiguring an electronic program guide, which is acquired by integrating electronic program guides for the terrestrial digital multimedia broadcasting and the satellite digital multimedia broadcasting, according to the electronic program guide information obtained through the filtering operation; and
outputting the reconfigured electronic program guide information to a user.

16. The apparatus as claimed in claim 15, wherein information for the filtering operation includes brief description information such as program identification information, time information and service names.

17. The apparatus as claimed in claim 15 or 16, wherein information regarding whether the electronic program guide information of a terrestrial digital multimedia broadcasting system is similar to that of a satellite digital multimedia broadcasting system is provided through an electronic program guide link information database between the systems, and information for the filtering operation is set in one of the terrestrial digital multimedia broadcasting and the satellite digital multimedia broadcasting, so that the filtering operation is performed.

18. The apparatus as claimed in one of claims 15 to 17, wherein similar broadcast programs in the terrestrial digital multimedia broadcasting and the satellite digital multimedia broadcasting can be searched for through the integrated electronic program guide.

19. The apparatus as claimed in claim 18, wherein the step of searching for the similar broadcast programs comprises the processor executing code for:
receiving the electronic program guide information of the terrestrial digital multimedia broadcasting, and extracting genre information on each broadcast program from the received electronic program guide information;
receiving the electronic program guide information of the satellite digital multimedia broadcasting, comparing the genre information with a "content descriptor' within an event information tableevent information table, which corresponds to the genre information, and generating a similar service group;
searching for a "short event descriptor", an "extended event descriptor", and a "data broadcast descriptor", which are included in the event information table of the electronic program guide information of the satellite digital multimedia broadcasting, and a ""service descriptor" within a service description table by means of keyword information from among electronic program guide information on a predetermined broadcast program of the terrestrial digital multimedia broadcasting within the similar service group, and finding a value similar to the keyword information; and
setting a broadcast program of the satellite digital multimedia broadcasting, in which the value similar to the keyword information has been found, as a broadcast program relating to the predetermined broadcast program of the terrestrial digital multimedia broadcasting.

20. The apparatus as claimed in claim 19, wherein the searched broadcast program is selected so that changing between the broadcast program of the terrestrial digital multimedia broadcasting and broadcast program of the satellite digital multimedia broadcasting is possible.
